# EUROPÄISCHE PATENTSCHRIFT

(11) **EP 1 611 423 B1**
(45) Veröffentlichungstag und Bekanntmachung des Hinweises auf die Patenterteilung: **08.08.2007**
(21) Anmeldenummer: 04725599.7
(22) Anmeldetag: 03.04.2004
(51) Int. Cl.: G01M 1/04, G01M 1/06

(54) **UNWUCHTMESSEINRICHTUNG**
UNBALANCE MEASURING DEVICE
DISPOSITIF DE MESURE DE DESEQUILIBRE

(30) Priorität: 10.04.2003 DE 10316767
(43) Veröffentlichungstag der Anmeldung: 04.01.2006
(73) Patentinhaber: Schenck RoTec GmbH, 64293 Darmstadt (DE)
(72) Erfinder: FELDMANN, Dagmar, 55270 Schwabenheim (DE); THELEN, Dieter, 64397 Modautal (DE); KÖRBER, Hans-Peter, 64291 Darmstadt (DE)
(74) Vertreter: Haar, Lucas Heinz Jörn
(86) Internationale Anmeldenummer: PCT/DE2004/000697
(87) Internationale Veröffentlichungsnummer: WO 2004/092699

(56) Entgegenhaltungen:
- EP-A- 0 508 683
- EP-A- 1 180 846
- FR-A- 1 443 480
- US-A- 2 758 487

## Beschreibung

Die Erfindung betrifft eine Unwuchtmeßeinrichtung für Rotoren, mit im wesentlichen einer Lagereinrichtung zur statischen Fluidlagerung für einen rotierbaren Rotor, einer Einrichtung zur Änderung des Drehverhaltens des Rotors, zumindest einem Wirkungen der Unwucht des Rotors in einem Meßvorgang erfassenden Meßumformer, einer Einrichtung zur Erzeugung eines Bezugssignals und einer Auswerteeinrichtung für die von dem Meßumformer gelieferten Signale unter Heranziehung des Bezugssignals, wobei die Lagereinrichtung zumindest zwei offene Lagerschalen zur Aufnahme von Rotorumfangsabschnitten und zumindest eine einer Rotorendfläche zugeordnete, steif abgestützte und fluidversorgte Lagerplatte aufweist und eine Einrichtung zur Erfassung des Drehverhaltens des Rotors vorgesehen ist.

Aus der EP 0 104 266 A1 sind eine Unwuchtmeßeinrichtung und ein Verfahren bekannt, mit dem Rotoren mit einer zentralen Bohrung mit hoher Auswuchtgüte ausgewuchtet werden können. Dazu wird der Rotor auf einen Lagerdorn einer Auswuchtmaschine aufgebracht und als Lagerungsfluid Luft benutzt, die zwischen einander gegenüberliegende Rotorbohrungs- und Dornlagerflächen gebracht wird. Fehler, hervorgerufen durch Oberflächenungenauigkeiten, treten nicht mehr in Erscheinung, da Formabweichungen der Rotorbohrung oder des Lagerdorns integriert werden und eine stabile Drehachse des Rotors gegeben ist.

Einen Rotor, der Lagerungsmöglichkeiten an seinem Außenumfang aufweist, wie sie z.B. durch die Lagerzapfen eines Elektroankers gebildet werden, kann man in Bezug auf diese Lagerstellen genau auswuchten. Eine aerostatische Lagerung eines derartigen Rotors wurde deshalb bisher nicht eingesetzt.

An die Auswuchtgüte insbesondere schnell laufender kleiner Rotoren wie z.B. Elektroanker, Turbinenrotore etc. werden jedoch laufend höhere Anforderungen gestellt. Eine zusätzliche Forderung ist die Minimierung der Taktzeiten im Herstellungsprozess insbesondere für die mit dem Auswuchten von Rotoren verbundenen Arbeitsvorgänge.

Bei einer aus EP-A-1 180 846 bekannten Unwuchtmesseinrichtung der eingangs genannten Art sind gabelförmige Lagerelemente zur Lagerung der Welle eines Rotors, beispielsweise eines Ankers für ein Elektromotor, vorgesehen. Den Wellenenden liegen steif abgestützte Lagerplatten gegenüber, wobei eine der Lagerplatten fluidversorgt ist. Um den Rotor in Drehung zu versetzen, weist die bekannte Einrichtung einen Riemenantrieb auf, der nicht rechtwinklig zur Drehachse, sondern in Bezug auf eine Radialebene leicht geneigt ist und daher das Bestreben hat, den Rotor mit geringer Kraft gegen die fluidversorgte Lagerplatte zu drücken.

Es ist weiterhin aus EP-A-0 508 683 eine fluidversorgte Lagereinrichtung für eine Unwuchtmesseinrichtung bekannt mit einer offenen Lagerschale, in der mehrere Fluidkanäle münden, die mit einem Luftreservoir in Verbindung stehen. Im Betrieb wird das Reservoir mit Druckluft beaufschlagt, und durch die Unwucht der gelagerten Welle induzierte Druckschwankungen in den Fluidkanälen werden zur Ermittlung des Schwingungsverhaltens der Welle erfaßt.

Der Erfindung liegt die Aufgabe zugrunde, eine Unwuchtmeßeinrichtung der eingangs genannten Art zu schaffen, wodurch eine vorteilhafte Standardisierung der Lagereinrichtung bzw. eine Modulbauweise der Unwuchtmeßeinrichtung gegeben ist und mit welcher die Auswuchtgüte insbesondere schnell laufender kleiner Rotore verbessert wird bei gleichzeitiger Verkürzung der zum Auswuchten benötigten Zeit.

Die Aufgabe wird bei einer Unwuchtmeßeinrichtung der eingangs angegebenen Art erfindungsgemäß dadurch gelöst, daß die Einrichtung zur Änderung des Drehverhaltens während des Meßvorgangs vom Rotor abgekoppelt ist und der Meßvorgang bei zeitkonstanten oder vorzugsweise bei zeitveränderlichem Drehverhalten erfolgt und daß die Lagerschalen austauschbar an der Lagereinrichtung angeordnet sind und die Lagereinrichtung ein Fluidversorgungssystem hat, das einen fluiddichten Anschluß von insbesondere unterschiedliche Fluidkanäle aufweisenden auszutauschenden Lagerschalen ermöglicht.

Erfindungsgemäß ist bei der so gestalteten Unwuchtmeßeinrichtung vorgesehen, daß der Rotor sowohl in Achsrichtung als auch in Radialrichtung in leicht zugänglichen Fluidlagern unter Verwendung von Gas oder Luft oder eines Gas- oder Luftgemisches, also aerostatisch gelagert ist und darüberhinaus der Beschleunigungs- bzw. Verzögerungsantrieb beim Unwuchtmeßvorgang vom Rotor abgekoppelt ist, wobei der Meßvorgang bei zeitveränderlichem Drehverhalten z.B. im Auslauf oder bei zeitkonstantem Drehverhalten bestimmt wird. Die Abstützung einer Rotorstirnfläche in Achsrichtung an einer dieser zugeordneten fluidversorgten Lagerplattenfläche führt auch bei horizontal angeordneter Rotorachse zu einer sehr präzisen Lagerposition des Rotors in Achsrichtung, da durch die Ausbildung einer Druckverteilung in der Strömung ähnlich derjenigen in einem Radialdiffusor strömungstechnisch eine Fixierung der Rotorlagerposition gegenüber der Lagerplatte erfolgt. Die Verbindung zwischen der Lagerplatte und ihrer Haltestruktur ist mit hoher Steifigkeit ausgeführt, um Schwingungen in Rotorachsrichtung, beispielsweise selbsterregte Schwingungen, zu vermeiden. Der Erfindung liegt die Erkenntnis zugrunde, daß nur durch die Kombination dieser Maßnahmen die gewünschte hochgenaue Messung innerhalb sehr kurzer Zeit erreicht wird. Mit der Erfindung wird der Rotor frei von störenden Kräften und Momenten gelagert und ausgemessen und so ein erheblich besseres Meßergebnis erzielt als auf herkömmliche Art.

Zwar ist es aus der EP 0 590 169 A1 schon bekannt, die Unwucht des Rotors bei nicht konstanter Meßdrehzahl zu bestimmen, jedoch sind dieser Veröffentlichung keine Hinweise darauf zu entnehmen, den Rotor in der erfindungsgemäßen Art zu lagern und rotieren zu lassen.

Durch die Erfindung ist eine vorteilhafte Standardisierung der Lagereinrichtung bzw. eine Modulbauweise der Unwuchtmeßeinrichtung gegeben. Dies gilt auch für einen Vorschlag, nach welchem vorgesehen ist, daß die Lagerplatte austauschbar an der Lagereinrichtung oder einem nicht schwingfähigen Bauteil der Unwuchtmeßeinrichtung angeordnet ist und die Lagereinrichtung oder das Bauteil ein Fluidversorgungssystem hat, das einen fluiddichten Anschluß von insbesondere unterschiedliche Fluidkanäle aufweisenden auszutauschenden Lagerplatten ermöglicht. Es kann vorteilhaft ein gemeinsames Fluidversorgungssystem zur Fluidversorgung sowohl der Lagerschalen als auch der Lagerplatte eingesetzt werden. Die Lagerplatte kann an einem Teil der Unwuchtmeßeinrichtung, der unwuchtinduzierte Schwingungen durchführt, wie Lagerständer oder Lagerbrücke, oder einem Bauteil angeordnet sein, das keinen unwuchtinduzierten Schwingungen unterworfen ist, wie z.B. der Rahmen.

Eine Einlagerung des Rotors in einer definierten Lage wird wesentlich erleichtert durch die Anordnung von zwei Lagerplatten, zwischen denen der Rotor mit seinen Stirnflächen angeordnet wird. Die genaue Fixierung der Lage des Rotors in Achsrichtung erfolgt strömungstechnisch über das an der Lagerfläche einer Lagerplatte in den Zwischenraum zwischen Lagerplatte und Stirnfläche ausströmende Fluid.

Vorteilhaft ist auch die Ausbildung der Einrichtung zur Änderung des Drehverhaltens als Riemenantrieb, dessen Riemen an zwei sich im wesentlichen gegenüberliegenden Rotorstellen anlegbar ist, da hierdurch während der Beschleunigung bzw. des Abbremsens des Rotors nur kleine Querkräfte auf den Rotor wirken, die die aerostatische Lagerung kaum beeinträchtigen können.

Der Vorschlag, den Riemenantrieb mit einem V-förmig ausgebildeten Bereich mit veränderbarem Öffnungswinkel zu versehen, in dessen Inneren der Rotor angeordnet ist, hat Vorteile hinsichtlich des Bauraums und in Hinblick auf die Betätigung zum Anlegen bzw. Wegschwenken des Riemens vom Rotor. Hierzu können einfache fluidbetätigte oder elektrisch betätigte Stelleinrichtungen eingesetzt werden, deren Stellbewegung darüberhinaus einfach automatisiert werden kann.

Die Erfindung wird nachfolgend ahhand eines Ausführungsbeispiels näher beschrieben, das in der Zeichnung dargestellt ist.

Es zeigen:
- Fig.1: eine erfindungsgemäße Unwuchtmeßeinrichtung in schematischer Darstellung
- Fig. 2: eine Seitenansicht der UnwuchtmeßeinrichtUng nach Fig. 1
- Fig. 3: einen Lagerbereich der Unwuchtmeßeinrichtung in schematischer Darstellung
- Fig. 4: einen Riemenantrieb zur Beschleunigung oder Abbremsung eines auszuwuchtenden Rotors

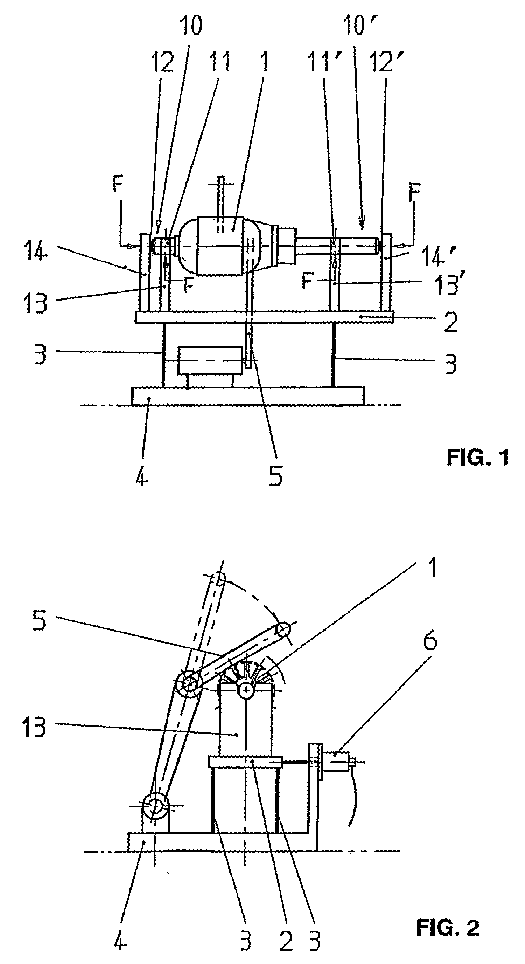

In Fig. 1 ist die erfindungsgemäße Unwuchtmeßeinrichtung für einen auszuwuchtenden Rotor 1 schematisch dargestellt. Die Unwuchtmeßeinrichtung weist eine Schwingbrücke 2 auf, auf der der Rotor 1, dessen Unwucht bestimmt wird und der im dargestellten Fall ein Elektroanker ist, rotierbar in einer Lagereinrichtung gelagert ist.

Die Schwingbrücke 2 ist in üblicher Weise über z.B. vier Stützfedern 3 schwingfähig gegen den Rahmen 4 der Unwuchtmeßeinrichtung abgestützt. Der Rotor 1 wird von einem Riemenantrieb 5 in Rotation versetzt bzw. nach dem Meßvorgang abgebremst. Unwuchtinduzierte Schwingungen der Schwingbrücke 2 werden mittels zumindest eines Aufnehmers 6 gemessen und zur Bestimmung der am Rotor 1 auszugleichenden Unwucht herangezogen. Während des Meßvorgangs ist der Riemenantrieb 5 vom Rotor 1 abgekoppelt.

Die Lagereinrichtung ist zur Lagerung des Rotors mit horizontaler Achsrichtung ausgebildet und weist Lagerbauteile für zwei Lagerstellen 10, 10' auf, die im dargestellten Ausführungsbeispiel an den beiden endseitigen Lagerzapfen des Elektroankers vorgesehen sind. Zur Abstützung des Rotors 1 in vertikaler Richtung ist jeweils eine offene, halbzylindrische Lagerschale 11, 11' vorgesehen. Die Lagerschale 11, 11' weist Fluidkanäle 21, 21' auf, die an ihrer halbzylindrischen Lageroberfläche münden und zur Zuführung von Gas oder Luft oder eines Gas- oder Luftgemisches zur aerostatischen Lagerung dienen. Zur Abstützung des Rotors 1 in horizontaler Richtung ist jeder der beiden Endflächen des Rotors 1 eine Lagerplatte 12, 12' zugeordnet. Die Lagerplatte 12, 12' weist Fluidkanäle auf, die an ihrer Lageroberfläche münden und zur Zuführung von Gas oder Luft oder eines Gas- oder Luftgemisches zur aerostatischen Lagerung dienen.

Die Lagerfläche der Lagerplatte 12, 12' ist komplementär zu der ihr zugeordneten Endfläche des Rotors 1 ausgebildet. Bei ballig ausgebildetem Rotorende weist die Lagerplatte 12, 12' eine entsprechend ausgeformte Vertiefung auf, bei ebener Endfläche hat die Lagerplatte 12, 12' eine ebene Lagerfläche. Die nicht dargestellten Austrittsöffnungen der Fluidkanäle in der Lagerfläche sind so angeordnet, daß das vorzugsweise parallel zur Achsrichtung ausströmende Fluid den Bereich einer eventuell vorhandenen Zentrierbohrung im Rotorende nicht beaufschlagt. Den Austrittsöffnungen in der Lagerfläche der Lagerplatte steht also stets die Lagerfläche an der Stirnseite des Rotors gegenüber. Strömungstechnisch bewirkt dies eine Fixierung oder Fesselung der Stirnfläche des Rotors zur bzw. an die Lagerfläche der Lagerplatte und damit die Gewährleistung einer genauen Rotorlagerposition in Achsrichtung.

Die beiden Lagerplatten 12, 12' und die beiden Lagerschalen 11, 11' können von einer gemeinsamen Fluidversorgung beaufschlagt werden, wie dies in Fig. 1 durch die mit F gekennzeichneten symbolisch dargestellten Leitungsabschnitte dargestellt ist. Unterschiedliche Gegebenheiten in Hinblick auf die vertikale und horizontale Abstützung des Rotors 1 können fluidtechnisch über z.B. Drosselstellen in den Fluidkanälen berücksichtigt werden.

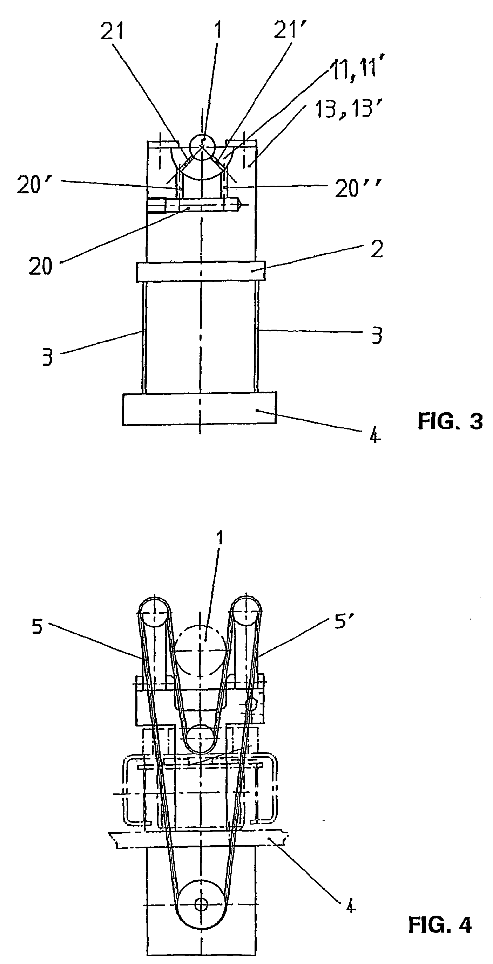

Zur Anpassung an verschiedene Rotortypen sind sowohl die Lagerschalen 11, 11' als auch die Lagerplatten 12, 12' austauschbar an Trägern 13, 13' und 14, 14' befestigt, die an der Lagerbrücke 2 angeordnet sind. Die Träger 13, 13', 14, 14' haben Fluidleitungen 20, die so ausgestaltet sind, daß ihre Öffnungen abgedichtet mit den Öffnungen der Fluidkanäle 21, 21' unterschiedlich ausgebildeter Lagerschalen 11, 11' bzw. unterschiedlich ausgebildeter Lagerplatten 12, 12' zusammenpassen, wie dies aus der Fig. 3 näher ersichtlich ist. In einem Standardbauteil, dem auf der Lagerbrücke befestigten Träger 13, 13', ist eine Fluidleitung 20 mit zwei Abzweigungen 20', 20" vorgesehen, die zwei Fluidkanälen 21, 21' in der halbzylindrischen Lagerschale 11, 11' fluiddicht zugeordnet sind. In nicht näher dargestellter Weise ist jeweils ein weiteres Standardbauteil als Träger 14, 14' für die jeweilige Lagerplatte 12,12' in entsprechender Weise ausgebildet.

Zum Antrieb oder zur Abbremsung des Rotors 1 wird ein Riemenantrieb 5 verwendet. Aus der Fig. 2 ist eine Ausführungsform ersichtlich, bei der der Antriebsriemen tangential an den Rotorumfang anlegbar ist.

Bei der in Fig. 4 dargestellten Ausführungsform ist der Antriebsriemen an zwei sich in etwa gegenüberliegenden Rotorumfangsflächen anlegbar, was hinsichtlich der Beanspruchung der aerostatischen Lagerung eine gleichmäßigere Belastung bedeutet. Der Riemenantrieb 5 weist dazu einen V-förmigen Abschnitt 5' auf, in dessen Innerem der Rotor 1 angeordnet ist. Die beiden Schenkel des V-förmigen Abschnitts 5' sind schwenkbar zwecks Anlage an oder Abheben von der Rotorumfangsfläche.

Statt eines Riemenantriebs 5 kann jeder andere geeignete Antrieb zur Beschleunigung bzw. Bremsung für den Rotor 1 verwendet werden wie z.B. ein magnetischer Antrieb oder ein Antrieb mittels Luft oder auch ein formschlüssig koppelbarer Antrieb. Erfindungswesentlich ist dabei, daß der Antrieb für den Meßvorgang abkoppelbar ist, so daß der Rotor 1 frei von störenden Kräften und Momenten rotiert. Die Messung kann bei zeitkonstantem oder zeitveränderlichem Drehverhalten des Rotors erfolgen, was den Einsatz unterschiedlich ausgestatteter Meß- und Auswerteeinrichtungen ermöglicht. Soll bei zeitkonstantem Drehverhalten gemessen werden, wird der Rotor durch einen Antrieb, der keine störenden Kräfte und Momente auf den Rotor aufbringt, wie z.B. eine Luftdüse, auf konstanter Drehzahl gehalten.

Alternativ zur Abstützung auf einer Schwingbrücke 2 kann der Rotor 1 auch auf z.B. zwei axial beabstandeten Lagerständern radial abgestützt werden. Der obere Bereich jedes Lagerständers, der die Lagerschale aufweist, ist über federnde Elemente am Rahmen der Unwuchtmeßeinrichtung abgestützt, so daß der obere Bereich mit der Lagerschale unwuchtinduzierte Schwingungen ausführen kann. Die axiale Abstützung kann mit dem oberen Bereich des Lagerständers verbunden sein, alternativ dazu aber auch nicht mitschwingend am Rahmen der Unwuchtmeßeinrichtung angeordnet sein.

## Patentansprüche

1. Unwuchtmeßeinrichtung für Rotoren (1) mit im wesentlichen einer Lagereinrichtung zur statischen Fluidlagerung für einen rotierbaren Rotor (1), einer Einrichtung zur Änderung des Drehverhaltens des Rotors (1), zumindest einem Wirkungen der Unwucht des Rotors (1) in einem Meßvorgang erfassenden Meßumformer (6), einer Einrichtung zur Erzeugung eines Bezugssignals und einer Auswerteeinrichtung für die von dem Meßumformer gelieferten Signale unter Heranziehung des Bezugssignals, wobei die Lagereinrichtung zumindest zwei offene Lagerschalen (11, 11') zur Aufnahme von Rotorumfangsabschnitten und zumindest eine einer Rotorendfläche zugeordnete, steif abgestützte, fluidversorgte Lagerplatte (12, 12') aufweist, und wobei eine Einrichtung zur Erfassung des Drehverhaltens des Rotors (1) vorgesehen ist, **dadurch gekennzeichnet, daß** die Einrichtung zur Änderung des Drehverhaltens während des Meßvorgangs vom Rotor (1) abgekoppelt ist und der Meßvorgang bei zeitkonstantem oder vorzugsweise bei zeitveränderlichem Drehverhalten erfolgt und daß die Lagerschalen (11, 11') fluidversorgt und austauschbar an der Lagereinrichtung angeordnet sind und die Lagereinrichtung ein Fluidversorgungssystem hat, das einen fluiddichten Anschluß von unterschiedliche Fluidkanäle (21, 21') aufweisenden auszutauschenden Lagerschalen (11, 11') an die Lagereinrichtung ermöglicht.

2. Unwuchtmeßeinrichtung nach Anspruch 1, **dadurch gekennzeichnet, daß** die Lagerplatte (12, 12') austauschbar an der Lagereinrichtung oder einem nicht schwingfähigen Bauteil der Unwuchtmeßeinrichtung angeordnet ist und die Lagereinrichtung oder das Bauteil ein Fluidversorgungssystem hat, das einen fluiddichten Anschluß von insbesondere unterschiedliche Fluidkanäle aufweisenden auszutauschenden Lagerplatten (12, 12') an die Lagereinrichtung oder das Bauteil ermöglicht.

3. Unwuchtmeßeinrichtung nach einem der vorhergehenden Ansprüche, **dadurch gekennzeichnet, daß** zwei die beiden Rotorendflächen zwischen sich einschließende, steif abgestützte, fluidversorgte Lagerplatten (12, 12') vorgesehen sind.

4. Unwuchtmeßeinrichtung nach einem der vorhergehenden Ansprüche, **dadurch gekennzeichnet, daß** die Einrichtung zur Änderung des Drehverhaltens ein Riemenantrieb (5) ist, dessen Riemen an zwei sich im wesentlichen gegenüberliegenden Rotorstellen anlegbar ist.

5. Unwuchtmeßeinrichtung nach Anspruch 4, **dadurch gekennzeichnet, daß** der Riemenantrieb (5) einen V-förmig ausgebildeten Bereich (5) mit veränderbarem Öffnungswinkel hat, in dessen Innerem der Rotor (1) angeordnet ist.

## Claims

1. Imbalance measuring device for rotors (1), with essentially one bearing device for static fluid bearing for a rotatable rotor (1), one device to change the rotary behaviour of the rotor (1), at least one measuring transducer (6) which captures the effects of the imbalance of the rotor (1) in a measuring process, one device to generate a reference signal, and one evaluation device for the signals which the measuring transducer supplies using the reference signal, whereby the bearing device has at least two open, fluid-supplied bearing shells (11, 11') to receive sections of the rotor periphery and at least one bearing plate (12, 12') which is assigned to a rotor end surface, rigidly supported and supplied with fluid, and in that a device to capture the rotary behaviour of the rotor (1) is provided, **characterized in that** the device to change the rotary behaviour is decoupled from the rotor (1) during the measuring process, which takes place with rotary behaviour which is constant or preferably variable over time, and **in that** the bearing shells (11, 11') are arranged exchangeably on the bearing device, and the bearing device has a fluid supply system, which makes possible a fluid-proof joining of bearing shells (11, 11') which are to be exchanged, and have different fluid channels (21, 21'), to the bearing device.

2. Imbalance measuring device according to Claim 1, **characterized in that** the bearing plate (12, 12') is arranged exchangeably on the bearing device or a component, which cannot oscillate, of the imbalance measuring device, and the bearing device or the component has a fluid supply system, which makes possible a fluid-proof joining of, in particular, bearing plates (12, 12') which are to be exchanged, and have different fluid channels, to the bearing device or component.

3. Imbalance measuring device according to one of the preceding claims, **characterized in that** two rigidly supported, fluid-supplied bearing plates (12, 12') which enclose the two rotor end surfaces between them are provided.

4. Imbalance measuring device according to one of the preceding claims, **characterized in that** the device to change the rotary behaviour is a belt drive (5), the belt of which can be put on at two essentially opposite rotor positions.

5. Imbalance measuring device according to Claim 4, **characterized in that** the belt drive (5) has a V-shaped area (5) with changeable included angle, within which the rotor (1) is arranged.

## Revendications

1. Dispositif de mesure de déséquilibre pour des rotors (1) avec essentiellement un dispositif de logement pour le logement hydraulique statique d'un un rotor (1) pouvant tourner, un dispositif pour modifier le comportement en rotation du rotor (1), au moins un convertisseur de mesure (6) saisissant les effets du déséquilibre du rotor (1) dans une procédure de mesure, un dispositif pour générer un signal de référence et un dispositif d'exploitation pour les signaux livrés par le convertisseur de mesure en tenant compte du signal de référence, le dispositif de logement présentant au moins deux coussinets de palier ouverts (11, 11') pour recevoir des sections périphériques du rotor et au moins une plaque d'appui (12, 12') attribuée à une surface d'extrémité du rotor, alimentée en fluide et supportée de façon rigide, et un dispositif pour saisir le comportement en rotation du rotor (1) étant prévu, **caractérisé en ce que** le dispositif pour modifier le comportement en rotation durant la procédure de mesure est découplé du rotor (1) et la procédure de mesure est réalisée avec un comportement en rotation constant dans le temps ou de préférence variable dans le temps, et **en ce que** les coussinets de palier (11, 11') sont alimentés en fluide et sont disposés sur le dispositif de logement en pouvant être échangés et le dispositif de logement a un système d'alimentation en fluide qui permet de raccorder des coussinets de palier (11, 11') échangeables et munis de différents canaux de fluide (21, 21') au dispositif de logement, ledit raccordement étant étanche au fluide.

2. Dispositif de mesure de déséquilibre selon la revendication 1, **caractérisé en ce que** la plaque d'appui (12, 12') est disposée échangeable sur le dispositif de logement ou sur une pièce de construction du dispositif de mesure de déséquilibre ne pouvant pas osciller, et le dispositif de logement ou la pièce de construction a un système d'alimentation en fluide avec lequel des plaques d'appui (12, 12') échangeables et qui sont notamment munies de canaux de fluides différents peuvent être raccordées au dispositif de logement ou à la pièce de construction, ledit raccordement étant étanche au fluide.

3. Dispositif de mesure de déséquilibre selon l'une des revendications précédentes, **caractérisé en ce qu'**il est prévu deux plaques d'appui (12, 12') enserrant entre elles les deux surfaces d'extrémité du rotor, supportées de façon rigide et alimentées en fluide.

4. Dispositif de mesure de déséquilibre selon l'une des revendications précédentes, **caractérisé en ce que** le dispositif est un entraînement par courroie (5) pour modifier les propriétés de rotation dont la courroie peut s'appuyer contre deux points du rotor situés essentiellement à l'opposé l'un de l'autre.

5. Dispositif de mesure de déséquilibre selon la revendication 4, **caractérisé en ce que** l'entraînement par courroie (5) présente une zone en V (5) avec un angle d'ouverture variable à l'intérieur de laquelle est disposé le rotor (1).
